# EUROPEAN PATENT APPLICATION

(11) **EP 4 159 815 A1**
(43) Date of publication of application: **05.04.2023**
(21) Application number: 21811997.2
(22) Date of filing: 20.05.2021
(51) Int. Cl.: C08L 101/00, B29C 65/16, C08G 69/26, C08K 3/00, C08K 3/013, C08K 5/00, C08L 77/00

(54) **LIGHT-TRANSMISSIVE RESIN COMPOSITION FOR LASER WELDING, KIT, MOLDED PRODUCT, AND METHOD FOR PRODUCING MOLDED PRODUCT**

(30) Priority: 25.05.2020 JP 2020090937
(71) Applicant: Mitsubishi Engineering-Plastics Corporation, Tokyo 105-0021 (JP)
(72) Inventor: OKAMOTO, Fumihito, Hiratsuka-shi, Kanagawa 254-0016 (JP)
(74) Representative: Zimmermann & Partner Patentanwälte mbB
(86) International application number: PCT/JP2021/019113
(87) International publication number: WO 2021/241381

(57) **Abstract**

To provide a transmissive resin composition for laser welding capable of suppressing migration of a coloring matter to other member; a kit; a formed article; and a method for manufacturing the formed article. The transmissive resin composition for laser welding contains, per 100 parts by mass of a crystalline thermoplastic resin: 10 to 120 parts by mass of a reinforcing filler; 0.01 to 1.0 part by mass of a light-transmissive coloring matter having a perylene skeleton; and at least one of copper compound, alkali metal halide, or cerium oxide.

## Description

### TECHNICAL FIELD

This invention relates to a transmissive resin composition for laser welding, a kit, a formed article, and a method for manufacturing the formed article.

### BACKGROUND ART

Thermoplastic resin is easy to process, and has widely been applied to vehicle component, electrical/electronic equipment parts, other precision equipment parts and so forth, making full use of its excellent properties. Also morphologically intricate parts have increasingly been manufactured by using the thermoplastic resin, particularly crystalline thermoplastic resin, so that parts having a hollow section, such as intake manifold, have been bonded with the aid of a variety of welding technologies including adhesive welding, vibration welding, ultrasonic welding, hot plate welding, injection welding and laser welding.

Adhesive welding has, however, suffered from loss of time due to the curing time, and environmental impact such as peripheral pollution. Ultrasonic welding and hot plate welding have been reported to damage the product due to vibration and heat, and to require post-process for removing abrasion powder or produced burr. Injection welding has often required to use specialized dies and molding machines, and has been feasible only with use of highly fluidic material.

On the other hand, laser welding is a method of bonding, by which a laser light transmitting (also referred to as non-absorptive or poorly-absorptive) resin member (occasionally referred to as "transmissive resin member", hereinafter), and a laser light-absorptive resin member (occasionally referred to as "absorptive resin member", hereinafter) are brought into contact and welded, thereby bonding both resin members. More specifically, laser light is irradiated through the transmissive resin member on the joint face, so as to melt, and then bond, the absorptive resin member that forms the joint face with the light energy. Since laser welding produces neither abrasion powder nor burr, causes less damage on the product, and since polyamide resin *per se* has a relatively high laser transmittance, so that recent attention has been focused on process of the polyamide resin products with the aid of laser welding technology.

The transmissive resin member is usually obtained by forming a light-transmitting resin composition. Patent Literature 1 describes this sort of light-transmitting resin composition, which is a resin for laser welding, having blended therein (A) 100 parts by weight of polyamide resin, and (B) 1 to 150 parts by weight of reinforcing filler having a refractive index at 23°C of 1.560 to 1.600, wherein at least one monomer that composes at least one kind of the (A) polyamide resin has an aromatic ring. Patent Literature 1 discloses, in EXAMPLES, resin compositions in which a blend of polyamide MXD6 and polyamide 66, or, a blend of polyamide 6I/6T and polyamide 6 is further blended with glass fiber and coloring matter.

### CITATION LIST

### PATENT LITERATURE

[Patent Literature 1] JP 2008-308526 A

### SUMMARY OF THE INVENTION

### TECHNICAL PROBLEM

Now, with advancement of the laser welding technology, some other novel material has been awaited. In particular, there is a need for a material capable of suppressing migration of a light-transmissive coloring matter in the transmissive resin member into other member (peripheral member) after laser welding.

This invention, aimed at solving the issues, is to provide a transmissive resin composition for laser welding capable of suppressing migration of a coloring matter to other member; a kit; a formed article; and a method for manufacturing the formed article.

### SOLUTION TO PROBLEM

The present inventors conducted research to address the above-mentioned problems, and as a result, the above problems are solved by using a light-transmissive coloring matter having a perylene skeleton as a light-transmissive coloring matter.

Specifically, the problems described above are solved by the following means.
<1> A transmissive resin composition for laser welding containing, per 100 parts by mass of a crystalline thermoplastic resin:
   10 to 120 parts by mass of a reinforcing filler;
   0.01 to 1.0 part by mass of a light-transmissive coloring matter having a perylene skeleton; and
   at least one of copper compound, alkali metal halide, and cerium oxide.
<2> The resin composition of <1>, having a lanthanum content in the resin composition of more than 0 ppm by mass and 40 ppm by mass or less.
<3> The resin composition of <1> or <2>, containing a cerium oxide having a lanthanum content, measured by ICP atomic emission spectroscopy, of more than 0% by mass and 1% by mass or less.
<4> The resin composition of any one of <1> to <3>, wherein a content of the cerium oxide in the resin composition is 0.01 to 5% by mass.
<5> The resin composition of any one of <1> to <4>, wherein the crystalline thermoplastic resin contains a polyamide resin.
<6> The resin composition of <5>, wherein the polyamide resin contains a polyamide resin that includes a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from straight-chain aliphatic α,ω-dicarboxylic acid having 4 to 20 carbon atoms.
<7> The resin composition of any one of <1> to <6>, wherein the light-transmissive coloring matter having a perylene skeleton is a pigment.
<8> A kit comprising the resin composition described in any one of <1> to <7>; and a light-absorptive resin composition that contains a thermoplastic resin and a light-absorptive coloring matter.
<9> A formed article formed of the resin composition described in any one of <1> to <7>, or formed with use of the kit described in <8>.
<10> The formed article of <9>, being a car-borne camera.
<11> A car-borne camera comprising the formed article described in <10>.
<12> A method for manufacturing a formed article, the method comprising laser-welding a formed article formed of the resin composition described in any one of <1> to <7>, with a formed article formed of a light-absorptive resin composition that contains a thermoplastic resin and a light-absorptive coloring matter.

### ADVANTAGEOUS EFFECTS OF INVENTION

This invention is the first to provide a transmissive resin composition for laser welding capable of suppressing migration of a coloring matter to other member; a kit; a formed article; and a method for manufacturing the formed article.

### DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

In this patent specification, "ppm" means ppm by mass.

The transmissive resin composition for laser welding of this embodiment (may simply referred to as "resin composition", hereinafter) contains, per 100 parts by mass of a crystalline thermoplastic resin: 10 to 120 parts by mass of a reinforcing filler; 0.01 to 1.0 part by mass of a light-transmissive coloring matter having a perylene skeleton; and at least one of copper compound, alkali metal halide, or cerium oxide. With such structure, migration of the light-transmissive coloring matter to other member may be effectively suppressed.

The resin composition of this embodiment preferably contains at least cerium oxide, from among copper compound, alkali metal halide and cerium oxide.

### <Crystalline Thermoplastic Resin>

The resin composition of this embodiment contains a crystalline thermoplastic resin. With use of the crystalline thermoplastic resin, obtainable is a resin composition having a performance which is necessary for laser welding and inherent to the crystalline thermoplastic resin. The performance inherent to the crystalline thermoplastic resin is more specifically exemplified by low water absorption, low variation of thermal shrinkage typically affected by die temperature, and high mechanical strength.

The crystalline thermoplastic resin is exemplified by polyamide resin and crystalline polyester resin. Polyamide resin is preferred.

The polyamide resin is a polymer having, as a repeating unit, acid amide obtainable by ring-opening polymerization of lactam, polycondensation of aminocarboxylic acid, or polycondensation of diamine and dibasic acid, and is specifically exemplified by polyamide 6, polyamide 11, polyamide 12, polyamide 46, polyamide 66, polyamide 610, polyamide 612, polyamide 1010, polyamide 1012, polyamide 6I, polyamide 6/66, polyamide 6T/6I, polyamide 6/6T, polyamide 66/6T, polyamide 66/6T/6I, poly[trimethylhexamethylene terephthalamide], poly[bis(4-aminocyclohexyl)methane dodecanamide], poly[bis(3-methyl-4-aminocyclohexyl) methane dodecanamide], poly[undecamethylene hexahydroterephthalamide], and xylylenediamine-based polyamide resin described later. Note that notation "I" denotes isophthalate component, and "T" denotes terephthalate component.

The polyamide resin used in this embodiment is suitably selected considering, for example, various characteristics inherent to these polyamide resins, and target applications of the formed article.

Among the aforementioned polyamide resins, preferred is a polyamide resin that includes a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from straight-chain aliphatic α,ω-dicarboxylic acid having 4 to 20 carbon atoms (xylylenediamine-based polyamide resin) .

In the xylylenediamine-based polyamide resin used in this embodiment, preferably 80 mol% or more of the diamine-derived structural unit is derived from xylylenediamine, wherein the proportion is more preferably 90 mol% or larger, even more preferably 95 mol% or larger, and yet more preferably 99 mol% or larger.

The xylylenediamine-derived structural unit is preferably metaxylylenediamine-derived structural unit and/or paraxylylenediamine-derived structural unit, more preferably contains 50 to 90 mol% of metaxylylenediamine and 10 to 50 mol% of paraxylylenediamine (without exceeding 100 mol% in total), and even more preferably contains 60 to 80 mol% of metaxylylenediamine and 20 to 40 mol% of paraxylylenediamine. In the xylylenediamine-based polyamide resin used in this embodiment, 95 mol% or more (preferably 99 mol% or more) of the xylylenediamine-derived structural unit is preferably metaxylylenediamine-derived structural unit and/or paraxylylenediamine-derived structural unit.

Diamine other than xylylenediamine, employable as a raw diamine component of the xylylenediamine-based polyamide resin, is exemplified by aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic ring-containing diamines such as bis(4-aminophenyl) ether, paraphenylenediamine, and bis(aminomethyl)naphthalene, all of which may be used singly, or in combination of two or more kinds.

In the xylylenediamine-based polyamide resin used in this embodiment, 70 mol% or more of the dicarboxylic acid-derived structural unit is derived from a straight-chain aliphatic α,ω-dicarboxylic acid having 4 to 20 carbon atoms, wherein the proportion is more preferably 75 mol% or more, even more preferably 85 mol% or more, yet more preferably 95 mol% or more, and furthermore preferably 99 mol% or more.

The straight-chain aliphatic α,ω-dicarboxylic acid having 4 to 20 carbon atoms is exemplified by succinic acid, glutaric acid, adipic acid sebacic acid, undecanedioic acid, and dodecanedioic acid. Among them, adipic acid and/or sebacic acid are preferred. The straight-chain aliphatic α,ω-dicarboxylic acid having 4 to 20 carbon atoms may be used singly, or in combination of two or more kinds.

Dicarboxylic acid component other than the straight-chain aliphatic α,ω-dicarboxylic acid having 4 to 20 carbon atoms is exemplified by phthalic acid compounds such as isophthalic acid, terephthalic acid, and orthophthalic acid; and isomers of naphthalene dicarboxylic acid such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid, all of which may be used singly, or in combination of two or more kinds thereof.

In a preferred embodiment of the xylylenediamine-based polyamide resin, xylylenediamine as a raw material contains 50 to 90 mol% of metaxylylenediamine and 10 to 50 mol% of paraxylylenediamine, and, the straight-chain aliphatic α,ω-dicarboxylic acid having 4 to 20 carbon atoms contains adipic acid and/or sebacic acid. More preferably, 90 mol% or more of the raw diamine is attributed to xylylenediamine, meanwhile the xylylenediamine contains 60 to 80 mol% of metaxylylenediamine and 40 to 20 mol% of paraxylylenediamine, totaling 99 mol% or more, meanwhile 90 mol% or more of the straight-chain aliphatic α,ω-dicarboxylic acid is attributed to adipic acid and/or sebacic acid.

Note that the xylylenediamine-based polyamide resin used in this embodiment, although having the diamine-derived structural unit and the dicarboxylic acid-derived structural unit as the major components, does not completely exclude any structural unit other than them, and may of course contain any structural unit derived from lactams such as ε-caprolactam or laurolactam; or from aminocarboxylic acids such as aminocaproic acid, and aminoundecanoic acid. Now, the diamine-derived structural unit and the dicarboxylic acid-derived structural unit may be referred to as the major components, if the total number thereof accounts for the largest percentage of the all structural units that compose the xylylenediamine-based polyamide resin. In this embodiment, the total of the diamine-derived structural unit and the dicarboxylic acid-derived structural unit preferably accounts for 90% or more of all structural units in the xylylenediamine-based polyamide resin, and more preferably accounts for 95% or more.

The resin composition of this embodiment preferably contains 30% by mass or more, relative to the resin composition, of the crystalline thermoplastic resin (preferably polyamide resin, more preferably xylylenediamine-based polyamide resin), the content is more preferably 35% by mass or more, even more preferably 40% by mass or more, and yet more preferably 45% by mass or more. Meanwhile, the upper limit of the content of the crystalline thermoplastic resin is preferably 80% by mass or below, and more preferably 75% by mass or below.

The resin composition of this embodiment may contain only one kind, or two or more kinds of the crystalline thermoplastic resin. When two or more kinds are contained, the total content preferably falls within the aforementioned ranges.

### <Reinforcing Filler>

The resin composition of this embodiment contains, per 100 parts by mass of the crystalline thermoplastic resin, 10 to 120 parts by mass of a reinforcing filler. With the aforementioned proportion of the reinforcing filler contained therein, the resin composition can achieve high mechanical strength. Note that the reinforcing filler in this embodiment is defined to exclude those that correspond to cerium oxide and nucleating agent.

The reinforcing filler in this embodiment is a substance capable of improving, when blended with a resin, mechanical property of the obtainable resin composition, to which any of ordinary reinforcing materials for plastics is applicable. The reinforcing filler may be either organic substance or inorganic substance, wherein inorganic substance is preferred. The reinforcing filler preferably applicable herein include fibrous reinforcing filler such as glass fiber, carbon fiber, basalt fiber, wollastonite, and potassium titanate fiber. Also applicable are granular or shapeless filler composed of calcium carbonate, titanium oxide, feldspar mineral, clay, organized clay, and glass bead; and scaly reinforcing material such as glass flake, mica, and graphite. Among them, preferred is the fibrous filler, and particularly preferred is glass fiber, from the viewpoint of mechanical strength, rigidity and heat resistance. The glass fiber applicable herein may be any of those having either circular cross section or modified cross section.

The reinforcing filler applicable herein is preferably surface-treated with a surface modifier such as coupling agent. The glass fiber having the surface modifier adhered thereon is advantageous for its excellence in durability, moist-heat resistance, hydrolysis resistance, and heat shock resistance.

The glass fiber has a composition of A-glass, C-glass, E-glass, S-glass, R-glass, M-glass, D-glass or the like. E-glass (non-alkali glass) is particularly preferred.

The glass fiber means an article having a true circular or polygonal cross section when viewed perpendicularly to the longitudinal direction, and having a fiber-like appearance.

The glass fiber used for the resin composition of this embodiment may be a single yarn, or may be a twisted yarn made of a plurality of single yarns.

Product form of the glass fiber may be any of "glass roving" which is a roll on which a single yarn or twisted yarn made of a plurality of single yarns is continuously wound, "chopped strand" cut into 1 to 10 mm length, and "milled fiber" ground into 10 to 500 µm length. These sorts of glass fiber are marketed with the trade names of "Glasron Chopped Strand" and "Glasron Milled Fiber" from Asahi Fiber Glass Co., Ltd., which are readily available. Glass fibers with different morphologies may be used in a combined manner.

The glass fiber used in this embodiment has a cross section which may be circular or non-circular. With use of the glass fiber having a non-circular cross section, the obtainable formed article will be more effectively suppressed from warping. In this embodiment, even use of the glass fiber having a circular cross section can effectively suppress the warpage.

Content of the reinforcing filler in the resin composition of this embodiment, per 100 parts by mass of the crystalline thermoplastic resin, is preferably 10 parts by mass or more, more preferably 20 parts by mass or more, even more preferably 30 parts by mass or more, and yet more preferably 40 parts by mass or more. The upper limit value, per 100 parts by mass of the crystalline thermoplastic resin, is preferably 120 parts by mass or below, and more preferably 110 parts by mass or below.

The content of the reinforcing filler in the resin composition of this embodiment is preferably 20% by mass or more of the resin composition, and more preferably 25% by mass or more. The upper limit value is preferably 70% by mass or below, more preferably 65% by mass or below, even more preferably 60% by mass or below, and yet more preferably 55% by mass or below.

The resin composition of this embodiment may contain only one kind of reinforcing filler, or two or more kinds thereof. When two or more kinds are contained, the total content falls within the aforementioned ranges. Note that the content of reinforcing filler in this embodiment is understood to involve the amounts of sizing agent and surface modifier.

### <Light-Transmissive Coloring Matter Having Perylene Skeleton>

The resin composition of this embodiment contains, per 100 parts by mass of the crystalline thermoplastic resin, 0.01 to 1.0 part by mass of a light-transmissive coloring matter having a perylene skeleton. With the light-transmissive coloring matter having a perylene skeleton blended therein, the resin composition will be able to effectively suppress color migration to other member (particularly to the absorptive resin member).

The light-transmissive coloring matter used in this embodiment is typically black or dark purple coloring matter, which is preferably a coloring matter that looks black to human eyes. The light-transmissive coloring matter also includes coloring matter that makes a blend demonstrate a light transmittance measured at 1070 nm wavelength of 20% or larger, when 0.2% by mass of such coloring matter (coloring matter presumed to be a light-transmissive coloring matter) is blended with at least one kind of crystalline thermoplastic resin (preferably polyamide resin, more preferably xylylenediamine-based polyamide resin), and 30% by mass of the glass fiber, totaling 100% by mass.

The light-transmissive coloring matter may be either dye or pigment. Pigment is preferred.

The coloring matter having a perylene skeleton is exemplified by Spectrasence K0087 (former Lumogen (registered trademark) Black K0087, Lumogen Black FK4280), and Spectrasence K0088 (former Lumogen Black K0088, Lumogen Black FK4281), all from BASF Colors & Effects Japan.

The resin composition of this embodiment contains, per 100 parts by mass of the crystalline thermoplastic resin, 0.01 parts by mass or more of the light-transmissive coloring matter having a perylene skeleton, the content is more preferably 0.05 parts by mass or more, more preferably 0.08 parts by mass or more, even more preferably 0.10 parts by mass or more, yet more preferably 0.15 parts by mass or more, furthermore preferably 0.18 parts by mass or more, and particularly preferably 0.20 parts by mass or more. Meanwhile, the resin composition of this embodiment contains, per 100 parts by mass of the crystalline thermoplastic resin, 1.0 part by mass or less of the light-transmissive coloring matter having a perylene skeleton, the content is more preferably 0.8 parts by mass or less, even more preferably 0.6 parts by mass or less, yet more preferably 0.5 parts by mass or less, and furthermore preferably 0.45 parts by mass or less.

The resin composition of this embodiment may contain only one kind of, or two or more kinds of the light-transmissive coloring matter having a perylene skeleton. When two or more kinds are contained, the total content preferably falls within the aforementioned ranges.

The resin composition of this embodiment, although allowed to contain some other coloring matter besides the light-transmissive coloring matter having a perylene skeleton, preferably contains substantially no such other coloring matter. "Contains substantially no ..." typically means that the content of such other coloring matter is less than 1% by mass of the light-transmissive coloring matter having a perylene skeleton.

### <Copper Compound>

The resin composition of this embodiment may contain a copper compound. With use of the copper compound, distinctively high heat aging resistance will be achieved.

The copper compound used in this embodiment is exemplified by copper halides (for example, copper iodide, copper bromide, and copper chloride) and copper acetates, which is preferably selected from copper(I) iodide, copper(II) iodide, copper(I) bromide, copper(II) bromide, copper(I) acetate, copper(II) acetate, copper(I) chloride, and copper(II) chloride; and more preferably selected from copper(I) iodide, copper(I) acetate, and copper(I) chloride.

The copper compound is preferably used in combination with an alkali metal halide described later. Combination of the copper compound with the alkali metal halide preferably relates to a 1:1 to 1:15 (mass ratio) mixture of the copper compound and alkali metal halide, more preferably relates to a 1:1 to 1:5 mixture, and even more preferably a 1:2 to 1:4 mixture.

Combination of the copper compound with the alkali metal halide may be understood referring to the description in paragraphs [0046] to [0048] of JP 2013-513681 A, the content of which is incorporated herein by reference.

Ratio of the copper compound in the resin composition of this embodiment is preferably 0.01 to 1% by mass, more preferably 0.05% by mass or larger, meanwhile preferably 0.5% by mass or smaller.

The resin composition of this embodiment may contain only one kind of, or two or more kinds of the copper compound. When two or more kinds are contained, the total content preferably falls within the aforementioned ranges.

### <Alkali Metal Halide>

The resin composition of this embodiment may contain an alkali metal halide. With use of the alkali metal halide, the heat aging resistance and moist-heat resistance tend to further improve.

The alkali metal halide used in this embodiment is defined by a halide of alkali metal. The alkali metal is preferably potassium and sodium, and more preferably potassium. The halogen atom is preferably iodine, bromine, and chlorine, and more preferably iodine. The alkali metal halide used in this embodiment is specifically exemplified by potassium iodide, potassium bromide, potassium chloride, and sodium chloride, among them preferred is potassium iodide.

Ratio of the alkali metal halide in the resin composition of this embodiment is preferably 0.01 to 1% by mass, and more preferably 0.1% by mass or larger, meanwhile preferably 0.5% by mass or smaller.

The resin composition of this embodiment may contain only one kind of, or two or more kinds of the alkali metal halide. When two or more kinds are contained, the total content preferably falls within the aforementioned ranges.

### <Cerium Oxide>

The resin composition of this embodiment preferably contains cerium oxide. With cerium oxide contained therein, the resin composition can effectively suppress color migration into other member (in particular, the absorptive resin member to be mated by laser welding), even after being left at high temperature and high humidity. Cerium oxide, having a relatively low Mohs hardness, is also less likely to damage the reinforcing filler such as glass fiber.

Cerium oxide in this embodiment is specified to have a purity of 90% by mass or above. That is, cerium oxide may contain an impurity. Cerium oxide used in this embodiment preferably has a lanthanum content, measured by ICP atomic emission spectroscopy, of more than 0% by mass and 1% by mass or less. Cerium oxide more preferably has a lanthanum content measured by ICP atomic emission spectroscopy of 0.01 to 0.7% by mass, even more preferably has a lanthanum content measured by ICP atomic emission spectroscopy of 0.02 to 0.4% by mass, and yet more preferably has a lanthanum content measured by ICP atomic emission spectroscopy of 0.05 to 0.2% by mass. Within these ranges, color migration into other member may be suppressed more effectively.

Use of cerium oxide thus containing a trace proportion of lanthanum enables easy blending of a desired amount of lanthanum into the resin composition.

In this embodiment, the cerium content in cerium oxide is preferably 73% by mass or more, more preferably 75% by mass or more, and even more preferably 77% by mass or more. Meanwhile, the upper limit value of the content of cerium oxide is preferably 85% by mass or below, more preferably 83% by mass or below, and even more preferably 80% by mass or below.

Cerium oxide used in this embodiment preferably has a median diameter (particle size determined by laser diffraction scattering method) of 3 µm or smaller. The lower limit of the median diameter is typically 0.1 um or above.

Use of cerium oxide having such median diameter can effectively suppress damage on the reinforcing filler, making it possible to obtain the resin composition that further excels in mechanical strength.

The content of cerium oxide in the resin composition of this embodiment is preferably 0.01% by mass of more of the resin composition, and is more preferably 0.05% by mass or more. Meanwhile, the upper limit value of the content of cerium oxide in the resin composition is preferably 5% by mass or below, more preferably 4% by mass or below, even more preferably 3% by mass or below, and yet more preferably 2% by mass or below.

### <Mold Releasing Agent>

The resin composition of this embodiment may contain a mold releasing agent.

The mold releasing agent is typically exemplified by aliphatic carboxylic acid, aliphatic carboxylic acid salt, ester formed between aliphatic carboxylic acid and alcohol, aliphatic hydrocarbon compound having a number average molecular weight of 200 to 15,000, polysiloxane-based silicone oil, ketone wax, and light amide. Among them, preferred are aliphatic carboxylic acid, aliphatic carboxylic acid salt, and ester formed between aliphatic carboxylic acid and alcohol, and more preferred is aliphatic carboxylic acid salt.

Details of the mold releasing agent may be understood referring to the descriptions in paragraphs [0055] to [0061] of JP 2018-095706 A, the content of which is incorporated herein by reference.

The content of the mold releasing agent, when contained in the resin composition of this embodiment is preferably 0.05 to 3% by mass of the resin composition, more preferably 0.1 to 0.8% by mass, and even more preferably 0.2 to 0.6% by mass.

The resin composition of this embodiment may contain only one kind of, or two or more kinds of the mold releasing agent. When two or more kinds are contained, the total content preferably falls within the aforementioned ranges.

### <Nucleating Agent>

The resin composition of this embodiment may contain a nucleating agent. With the nucleating agent blended therein, the resin composition becomes more likely to solidify due to promoted crystallization, thus improving the forming cycle. The nucleating agent is not specifically limited, as far as it remains unmelt during melt working, and can act as a crystal nucleus in the cooling process. In particular, talc and calcium carbonate are preferred, and talc is more preferred.

The nucleating agent has the number-average particle size whose lower limit is preferably 0.1 µm or above, more preferably 1 um or above, and even more preferably 3 µm or larger or above. The nucleating agent has the number-average particle size whose upper limit is preferably 40 µm or below, more preferably 30 µm or below, even more preferably 28 µm or below, yet more preferably 15 µm or below, and furthermore preferably 10 µm or below.

Ratio of the nucleating agent in the resin composition of this embodiment is preferably 0.01 to 1% by mass, more preferably 0.1% by mass or larger, and more preferably 0.5% by mass or smaller.

The resin composition of this embodiment may contain only one kind, or two or more kinds of the nucleating agent. When two or more kinds are contained, the total content preferably falls within the aforementioned ranges.

### <Other Components>

The resin composition of this embodiment may contain other components, without departing from the spirit of this embodiment. Such additive is exemplified by light stabilizer, antioxidant, UV absorber, fluorescent brightener, anti-dripping agent, anti-static agent, anti-clouding agent, anti-blocking agent, flow modifier, plasticizer, dispersion aid, antibacterial agent, and flame retardant. These components may be used singly, or in combination of two or more kinds.

The resin composition of this embodiment contains the crystalline thermoplastic resin, the reinforcing filler, the light-transmissive coloring matter having a perylene skeleton, at least one of the copper compound, the alkali metal halide or cerium oxide, and other additives, while adjusting the total contents of the individual components to 100% by mass. This embodiment is exemplified by a case where the crystalline thermoplastic resin, the reinforcing filler, the light-transmissive coloring matter having a perylene skeleton, at least one of the copper compound, the alkali metal halide or cerium oxide, the nucleating agent, and the mold releasing agent will add up to 99% by mass or more of the resin composition.

### <Lanthanum Content in Resin Composition>

The resin composition of this embodiment preferably has a lanthanum content of more than 0 ppm by mass and 150 ppm by mass or less. With a trace amount of lanthanum contained therein, the resin composition can effectively suppress color migration, even after being left at high temperature and high humidity. With the content adjusted to 150 ppm by mass or less, and particularly adjusted to 40 ppm by mass or less, the resin composition can retain high tensile strength, even after being left at high temperature and humidity.

The lower limit value of the lanthanum content in the resin composition is preferably 0.01 ppm by mass or above, more preferably 0.05 ppm by mass or above, even more preferably 0.1 ppm by mass or above, yet more preferably 0.5 ppm by mass or above, furthermore preferably 0.8 ppm by mass or above, again furthermore preferably 1 ppm by mass or above, and particularly preferably 2 ppm by mass or above.

Meanwhile, the upper limit value of the lanthanum content in the resin composition is preferably 40 ppm by mass or below, more preferably 30 ppm by mass or below, even more preferably 25 ppm by mass or below, yet more preferably 20 ppm by mass or below, furthermore preferably 15 ppm by mass or below, again furthermore preferably 12 ppm by mass or below, again furthermore preferably 8 ppm by mass or below, and particularly preferably 5 ppm by mass or below.

For the resin composition of this embodiment, lanthanum is normally introduced by lanthanum having been included in cerium oxide.

### <Method for Producing Resin Composition>

A method for producing the resin composition of this embodiment, although not specifically limited, preferably uses a single-screw or twin-screw extruder as a kneader, devised to enable degassing through a vent port. The crystalline thermoplastic resin component, the reinforcing filler, the light-transmissive coloring matter, at least one of copper iodide, potassium iodide or cerium oxide, and other optional additives may be fed to the kneader en *bloc;* or such other components to be blended may be sequentially fed, after the crystalline thermoplastic resin was fed. The reinforcing filler is preferably fed at the middle of the kneader, in order to avoid fracture during kneading. Alternatively, two or more kinds of component selected from the individual components may be pre-mixed or kneaded.

In this embodiment, the light-transmissive coloring matter may be preliminarily mixed typically with a crystalline thermoplastic resin to prepare a masterbatch, and then further kneaded with other components (crystalline thermoplastic resin, the reinforcing filler, the light-transmissive coloring matter, and at least one of copper iodide, potassium iodide or cerium oxide, etc.) to prepare the resin composition of this embodiment.

The method for manufacturing a formed article with use of the resin composition of this embodiment is not specifically limited, to which any of known forming methods having been applied to thermoplastic resin are applicable, from among injection molding, hollow molding, extrusion molding, press forming and so forth. A particularly preferred forming method in this case is injection molding, in consideration of good fluidity. In the injection molding, cylinder temperature is preferably controlled to 250 to 300°C.

### <Kit>

The resin composition of this embodiment, and the light-absorptive resin composition that contains a thermoplastic resin and a light-absorptive coloring matter, are preferably used for a kit, particularly for a kit for manufacturing a formed article by laser welding (laser-weld article).

That is, the resin composition contained in the kit plays a role of the light-transmitting resin composition, and a formed article formed of the light-transmitting resin composition serves as a transmissive resin member through which the laser light in laser welding can transmit. On the other hand, a formed article formed of the light-absorptive resin composition serves as an absorptive resin member that absorbs the laser light in laser welding.

### <<Light-Absorptive Resin Compositions

The light-absorptive resin composition used in this embodiment contains a thermoplastic resin and a light-absorptive coloring matter. Also other components such as reinforcing filler may be contained.

The thermoplastic resin is exemplified by polyamide resin, olefinic resin, vinyl-based resin, styrene-based resins, acrylic resin, polyphenylene ether-based resin, polyester resin, polycarbonate resin, and polyacetal resin. Particularly preferred is crystalline thermoplastic resin for its good compatibility with the light-transmissive resin composition (resin composition of this embodiment), more preferred are polyamide resin and crystalline polyester resin, and even more preferred is polyamide resin. The thermoplastic resin may be of single kind, or two or more kinds.

The polyamide resin used for the light-absorptive resin composition is preferably the aforementioned crystalline thermoplastic resin, although the type of which is not specifically limited.

The reinforcing filler is exemplified by those capable of absorbing laser light, such as glass fiber, carbon fiber, silica, alumina, carbon black, and inorganic powder coated with a laser-absorptive material. Glass fiber is preferred. The glass fiber is synonymous to the glass fiber which may be blended with the aforementioned resin composition of this embodiment. Content of the reinforcing filler is preferably 20 to 70% by mass, more preferably 25 to 60% by mass, and even more preferably 30 to 55% by mass.

The light-absorptive coloring matter includes coloring matters that demonstrate absorption in the wavelength range of the laser to be irradiated, which is typically within the wavelength range from 900 nm to 1100 nm in this embodiment. The light-absorptive coloring matter also includes coloring matter that makes the resin composition demonstrate a light transmittance of smaller than 30%, and further 10% or smaller, typically when 0.3 parts by mass of such coloring matter is blended per 100 parts by mass of the crystalline thermoplastic resin, and measured by a method described later in EXAMPLES.

The light-absorptive coloring matter is specifically exemplified by inorganic pigments [black pigment such as carbon black (acetylene black, lamp black, thermal black, furnace black, channel black, Ketjen black, etc.), red pigment such as red iron oxide, orange pigment such as molybdate orange, and white pigment such as titanium oxide]; and organic pigment (yellow pigment, orange pigment, red pigment, blue pigment, green pigment, etc.). Among them, the inorganic pigment is preferred for its generally high concealability, the black pigment is more preferred, and carbon black is even more preferred. Two or more kinds of these light-absorptive coloring matters may be combined for use. The content of the light-absorptive coloring matter is preferably 0.01 to 30 parts by mass, per 100 parts by mass of the crystalline thermoplastic resin.

In the kit of this embodiment, the component of the resin composition excluding the light-transmissive coloring matter and the reinforcing filler, and the component of the light-absorptive resin composition excluding the light-absorptive coloring matter and the reinforcing filler, are preferably commonalized up to a degree of 80% by mass or more, which is more preferably 90% by mass or more, and even more preferably 95 to 100% by mass.

### <<Laser Welding Method>>

Next, a laser welding method will be explained. In this embodiment, a formed article may be manufactured by laser-welding the formed article formed of the resin composition of this embodiment (transmissive resin member), and the formed article formed of the light-absorptive resin composition (absorptive resin member). Laser welding can tightly weld the transmissive resin member and the absorptive resin member, without using an adhesive.

Shape of the members, although not specifically limited, usually has at least a surface-contact part (flat or curved), since the members are used in a joined form as a result of laser welding. In the laser welding, the laser light transmitted through the transmissive resin member is absorbed by the absorptive resin member, causing melting and welding of both members. In particular, the absorptive resin member melts, the heat conducts to the transmissive member, making both members welded. The formed article formed of the resin composition of this embodiment, having high transmittance of laser light, is suitably used as the transmissive resin member. Thickness of the member through which the laser light transmits (thickness of a part through which the laser light transmits, measured in the direction of transmission of the laser light) may be suitably determined, considering application, chemical composition of the resin composition and so forth, which is typically 5 mm or smaller, and preferably 4 mm or smaller.

A laser light source used for laser welding may be determined depending on absorption wavelength of the light-absorptive coloring matter, wherein the laser light of 900 to 1100 nm wavelength is preferred, and to which semiconductor laser or fiber laser is applicable.

More specifically, in an exemplary case where the transmissive resin member and the absorptive resin member are welded, first, the welding sites of both members are brought into contact. The welding sites herein are preferably kept in surface contact between flat faces, curved faces, or combination of flat and curved faces. Next, the laser light is irradiated through the transmissive resin member. The laser light herein may be optionally condensed through a lens, on the interface between both members. The condensed beam transmits through the transmissive resin member, absorbed at around the surface of the absorptive resin member, generates heat, and melts the resin. The heat is then conducted by thermal conduction also to the transmissive resin member to melt it, to form a molten pool at the interface between both members. Both member are welded after cooled.

The formed article, composed of the transmissive resin member and the absorptive resin member thus welded, has high weld strength. Note that the formed article in the context of this embodiment encompasses not only finished product or parts, but also members that compose a part of them.

The formed article obtained by laser welding in this embodiment excels in mechanical strength and weld strength, and causes less damage on the resin even after laser irradiation, and is therefore applicable to various purposes, such as a variety of storage containers, electrical/electronic equipment, office automation (OA) equipment, home electric appliances, machine and mechanism parts, and vehicle mechanism parts. In particular, the formed article is suitable for food container, drug container, oil and fat products container, vehicle hollow parts (various tanks, intake manifold part, camera body, etc.), vehicle electrical parts (various control units, ignition coil part, etc.), motor part, various sensor parts, connector part, switch part, circuit breaker part, relay part, coil part, transformer part, lamp part, and so forth. The resin composition and the kit of this embodiment are particularly suitable for vehicle hollow parts such as car-borne camera body.

### EXAMPLES

This invention will further be detailed referring to Examples. All materials, amounts of consumption, ratios, process details and procedures described in Examples below may suitably be modified, without departing from the spirit of this invention. Hence, the scope of this invention is by no means limited to specific Examples below.

In a case where any measuring instrument used in EXAMPLES become unavailable typically due to discontinuation, the measurement may be conducted with use of other instrument having equivalent performances.

### <Polyamide Resin>

MP10: Metaxylylenediamine/paraxylylenediamine (M/P) mole ratio = 7:3, synthesized according to Exemplary Synthesis below.

### <<Exemplary Synthesis of MP10 (MP mole ratio = 7:3)>>

Sebacic acid was melted under heating in a reaction can with a nitrogen atmosphere, the content was kept stirred, to which a mixed diamine having a mole ratio of paraxylylenediamine (from Mitsubishi Gas Chemical Company) and metaxylylenediamine (from Mitsubishi Gas Chemical Company) of 3:7 was slowly added dropwise under pressure (0.35 MPa), so as to adjust the mole ratio of diamine and sebacic acid to approximately 1:1, the temperature was then elevated up to 235°C. Upon completion of the dropwise addition, the reaction was continued for 60 minutes to control the content of components having a molecular weight of 1,000 or smaller. Upon completion of the reaction, the content was taken out in the form of strands, pelletized with a pelletizer, to obtain polyamide resin (MP10).

MP6: MP mole ratio = 7:3, synthesized according to Exemplary Synthesis below.

### <<Exemplary Synthesis of MP6 (MP mole ratio = 7:3) >>

Adipic acid (from Rhodia S.A.) was melted under heating in a reaction can with a nitrogen atmosphere, the content was kept stirred, to which a mixed diamine having a mole ratio of paraxylylenediamine (from Mitsubishi Gas Chemical Company) and metaxylylenediamine (from Mitsubishi Gas Chemical Company) of 3:7 was slowly added dropwise under pressure (0.35 MPa), so as to adjust the mole ratio of diamine and adipic acid to approximately 1:1, the temperature was then elevated up to 270°C. Upon completion of the dropwise addition, the pressure was lowered down to 0.06 mPa, and the reaction was continued for 10 minutes to control the content of components having a molecular weight of 1,000 or smaller. The content was then taken out in the form of strands, pelletized with a pelletizer, to obtain polyamide resin (MP6).

PA66: Polyamide 66, Invista U4800, from Invista Nylon Polymers Co.

### <Talc>

#5000S: MicronWhite, from Hayashi Kasei Co., Ltd.

### <Copper Iodide (GuI)>

Copper(I) iodide, from Nihon Kagaku Sangyo Co., Ltd.

### <Potassium Iodide>

Product from FUJIFILM Wako Pure Chemical Corporation

### <Zinc(II) Stearate>

Product from FUJIFILM Wako Pure Chemical Corporation

### <Mold Releasing Agent>

CS8CP: Montanate soap, from Nitto Chemical Industry Co., Ltd.

### <Cerium Oxide>

Cerium oxide 1: Cerium oxide having a purity of 90% by mass or higher, Cerium Oxide Hydrate 90, from Treibacher Industrie Japan, cerium content = 72.1% by mass, lanthanum content = 4.4% by mass, median diameter (particle size measured by laser diffraction scattering method) ≤ 2 µm

Cerium oxide 2: Cerium oxide having a purity of 90% by mass or higher, Cerium Oxide Hydrate 90, from Treibacher Industrie Japan, cerium content = 78.5% by mass, lanthanum content = 0.1% by mass, median diameter (particle size measured by laser diffraction scattering method) ≤ 3 um

### <Analysis of Cerium Content in Cerium Oxide>

A sample was dried in the atmosphere, under heating at 120°C for 2 hours. One hundred milligrams of the sample was precisely weighed, to which perchloric acid, hydrogen peroxide and water were added, the mixture was decomposed under heating, to which water was added up to a certain volume. The resultant solution was diluted, and analyzed by ICP atomic emission spectroscopy (ICP-AES), according to the acid concentration matching method for Ce, and the standard addition analytical curve method for La.

### <Light-Transmissive Coloring Matter>

Lumogen 4281 (K0088) : Perylene pigment Lumogen (registered trademark) Black K0088 (former Lumogen Black FK 4281), from BASF Colors & Effects Japan LTW-8701H: Solvent Red 179 = 0.46% by mass, Solvent Yellow 163 = 0.23% by mass, Acid Blue 80 = 6.53% by mass, from Orient Chemical Industries Co., Ltd.

LTW-8731H: Solvent Red 179 = 1.56% by mass, Acid Blue 80 = 4.48% by mass, from Orient Chemical Industries Co., Ltd.

### <Reinforcing Filler>

ECS03T-211H: E-glass fiber, from Nippon Electric Glass Co., Ltd., weight-average fiber diameter = 10.5 um, cut length = 3.5 mm

### Example 1

### <Compound>

The individual components, but excluding the reinforcing filler, were precisely weighed and dry-blended according to the ratio summarized in Table 1 described later (denoted in parts by mass in Table 1), and the blend was fed from the base of screws of a twin-screw extruder (TEM26SS, from Toshiba Machine Co., Ltd.) by using a twin-screw cassette weighing feeder (CE-W-1-MP, from Kubota Corporation). Meanwhile, the reinforcing filler was fed by using a vibrating cassette weighing feeder (CE-V-1B-MP, from Kubota Corporation), from the lateral side of the aforementioned twin-screw extruder, then melt-kneaded with the resin component and so forth, to obtain a resin composition pellet. Temperature of the extruder was preset to 280°C.

The thus obtained pellet was dried at 120°C for 4 hours, and then formed into a No. 4 specimen in compliance with ASTM D638 (1.5 mm thick), with use of an injection molding machine (J-50ADS, from Japan Steel Works, Ltd., clamping pressure = 50 T).

### <Color Migration Test after Leaving under High Temperature and High Humidity>

A No. 4 specimen (mating member) in compliance with ASTM D638 (1.5 mm thick) was manufactured by extrusion and injection molding in the same way as in Example 1, except that the individual components, excluding the light-transmissive coloring matter, were blended.

The No. 4 specimen in compliance with ASTM D638 obtained from the pellet described in Example 1, and the mating member were stacked, and clamped. The stack was then allowed to stand still under a condition of 85°C and 85% relative humidity, for 50 hours and 1000 hours. After standing still, whether migration of the light-transmissive coloring matter into the mating member occurred or not was visually observed, and judged on a five-point scale of A to E, wherein "A" was given for the sample without color migration, and "E" was given for the sample with most severe color migration. All judgments were placed on the basis of color migration of a specimen obtained from a laser-welded article in Comparative Example 2, allowed to stand still at 85°C and 85% relative humidity for 1000 hours, which was ranked "D". Ten experts participated in the judgment, and made decision by majority vote.

### Examples 2 to 36, Comparative Examples 1 to 18

Resin composition pellets and No. 4 specimen (1.5 mm thick) in compliance with ASTM D638 were obtained in the same way as in Example 1, except that the amounts of blending of the raw materials were altered as summarized in Tables 1 to 6 (contents of the individual components in Tables 2 6 are given in parts by mass). Temperature of the extruder was preset to 280°C for the cases where MP6 was used as the polyamide resin, and to 280°C for the cases where PA66 was used.

The color migration test was conducted in the same way as in Example 1, after standing still under high temperature and high humidity. Note that the mating member used in Example 2 was made of a resin composition same as that in Example 2 listed in Table, except that the light-transmissive coloring matter was not contained. Also note that the mating member used in Example 3 was made of a resin composition same as that in Example 3, except that the light-transmissive coloring matter was not contained. The same will apply to Examples 4 to 36 and Comparative Examples 1 to 18.

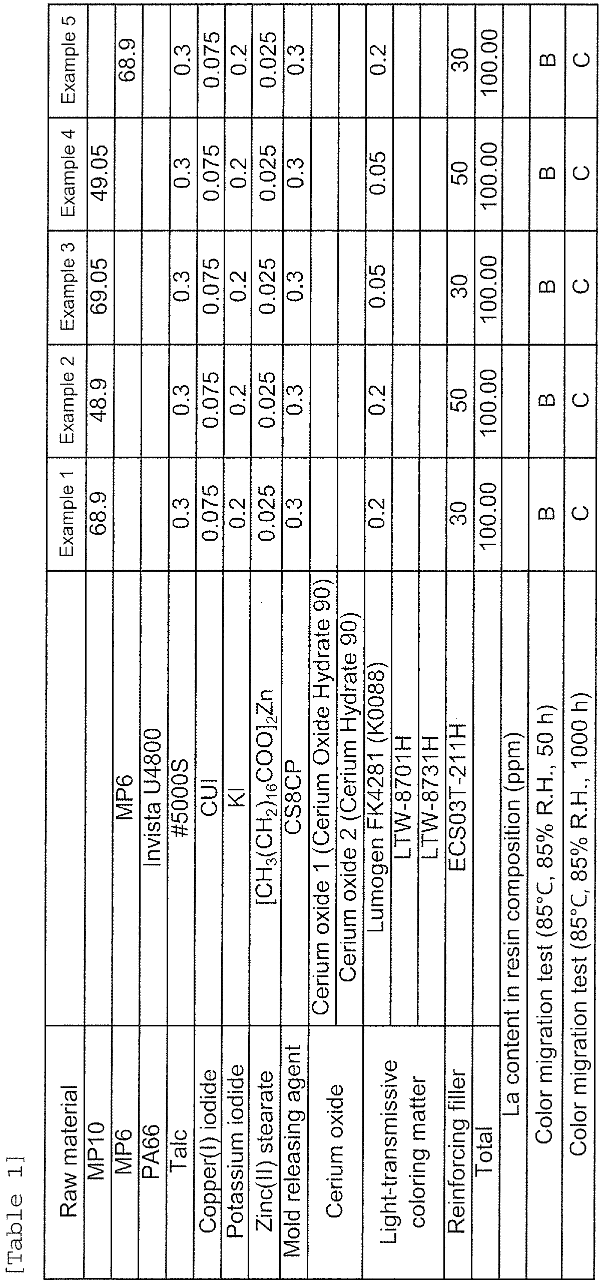

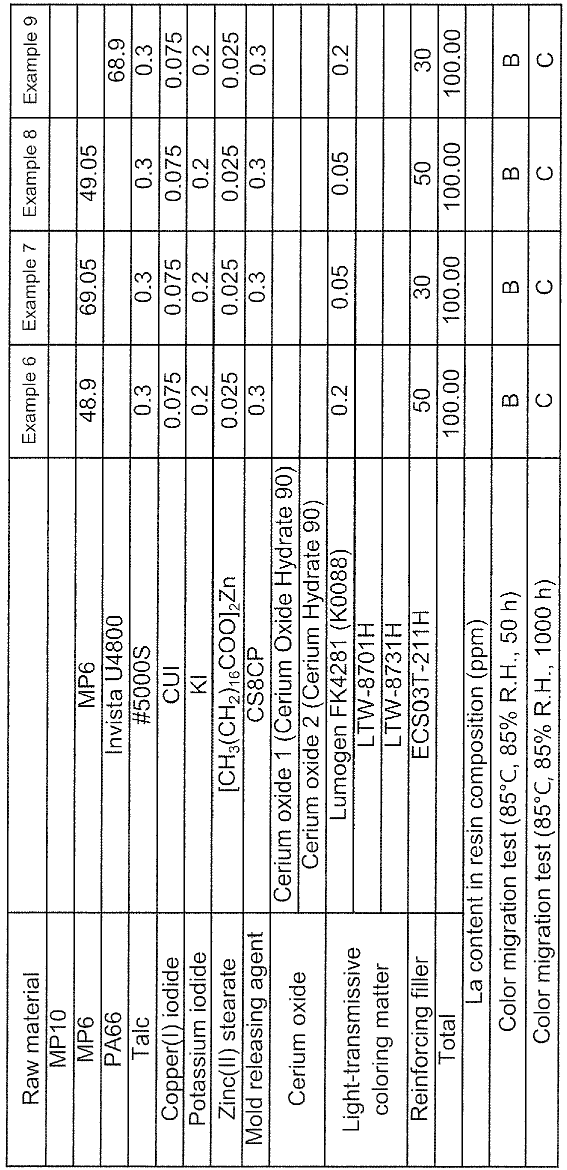

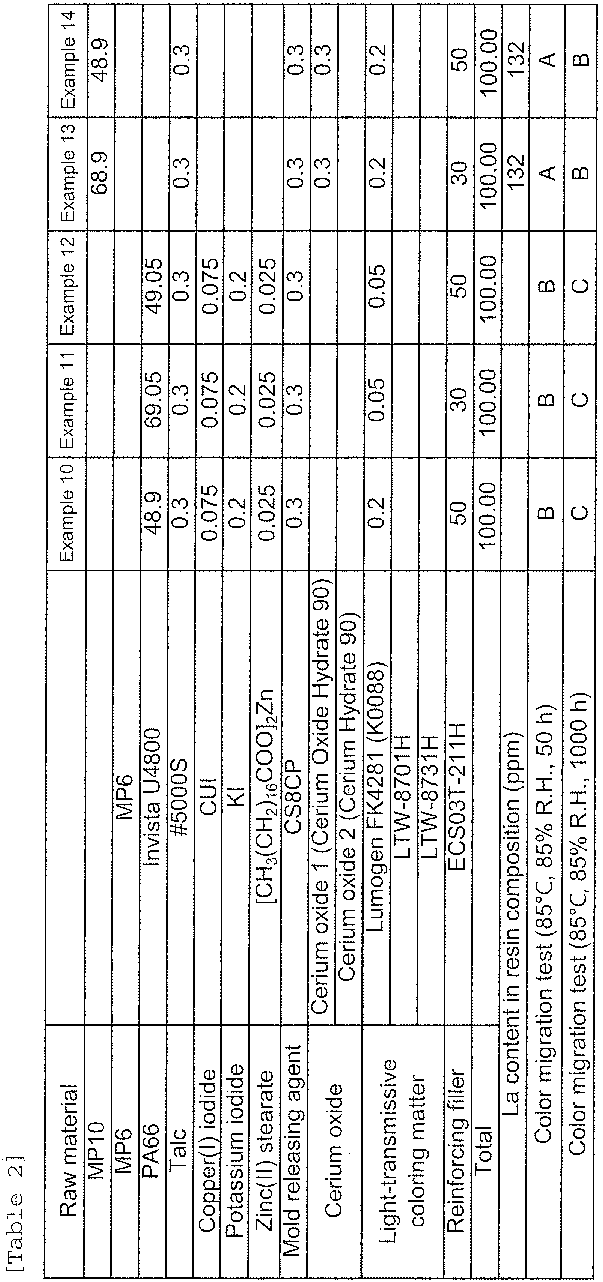

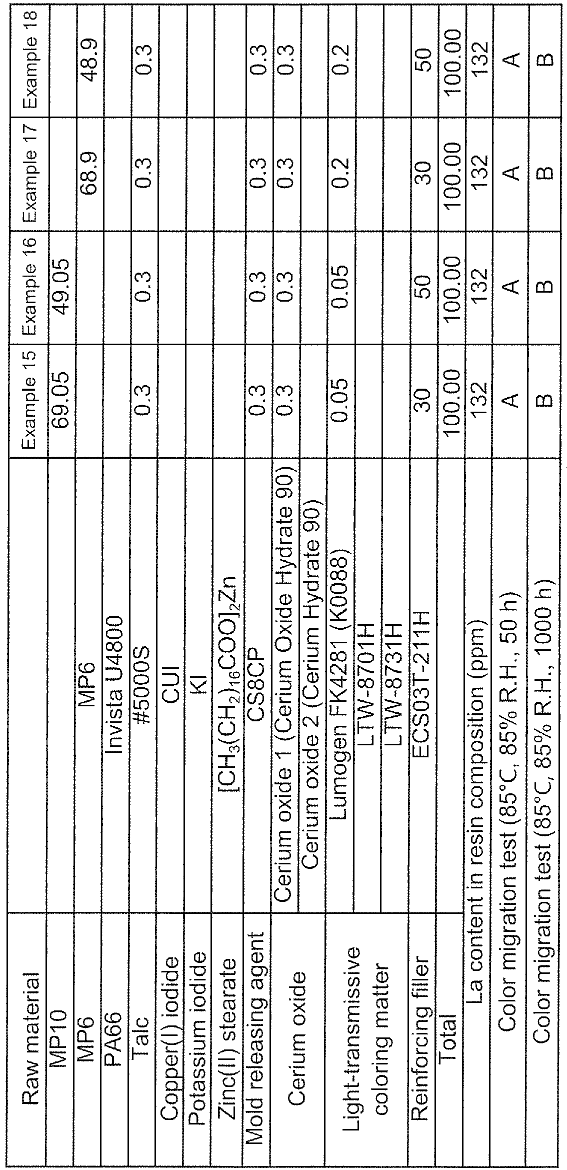

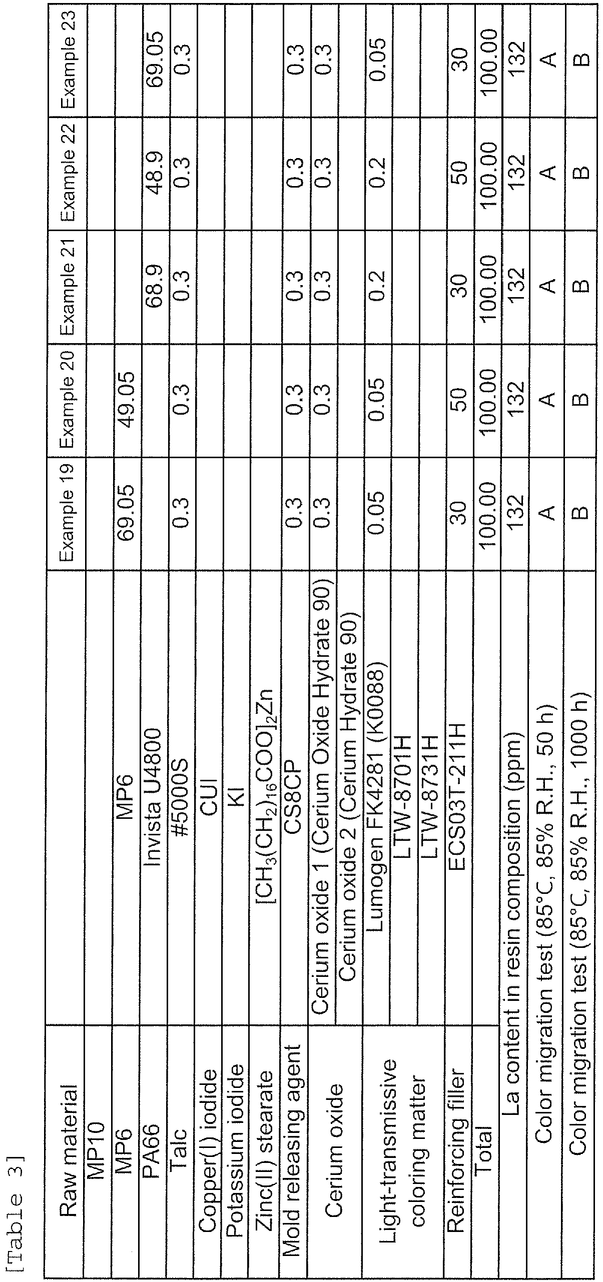

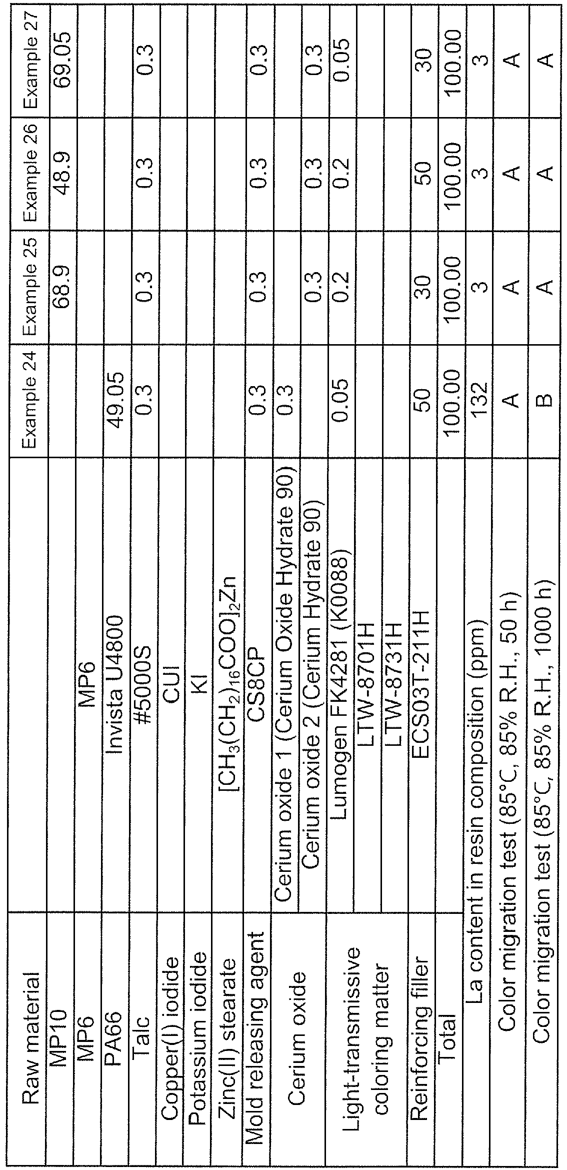

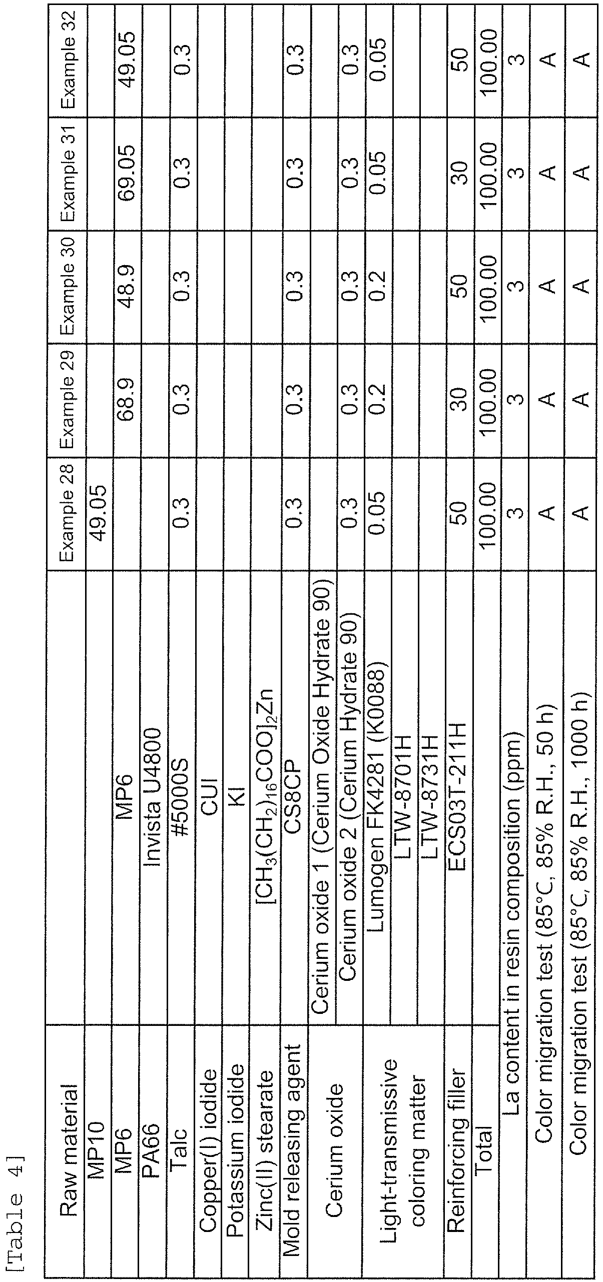

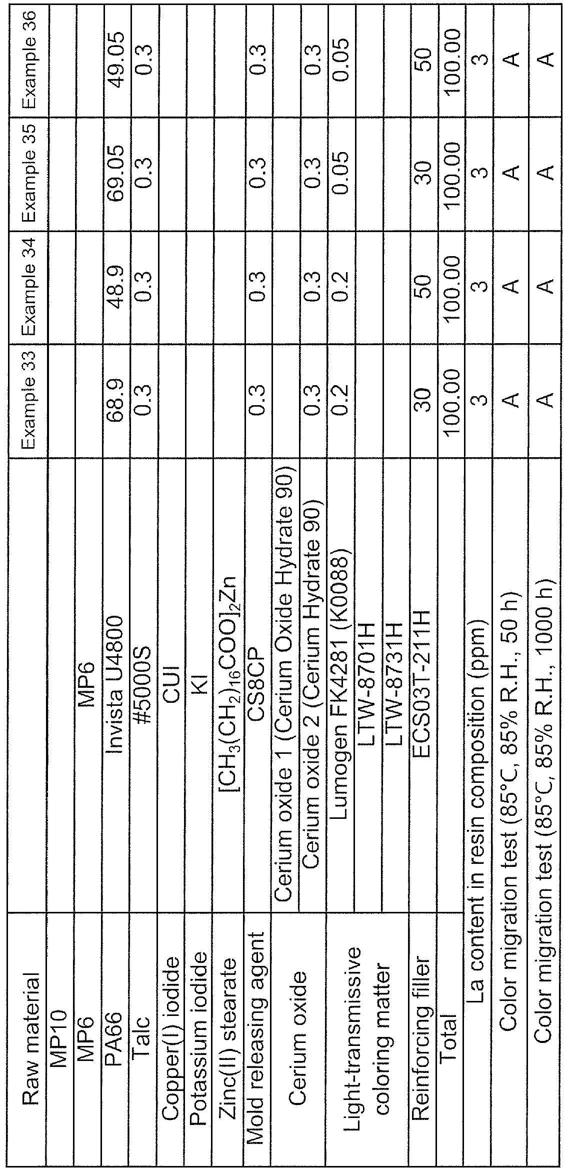

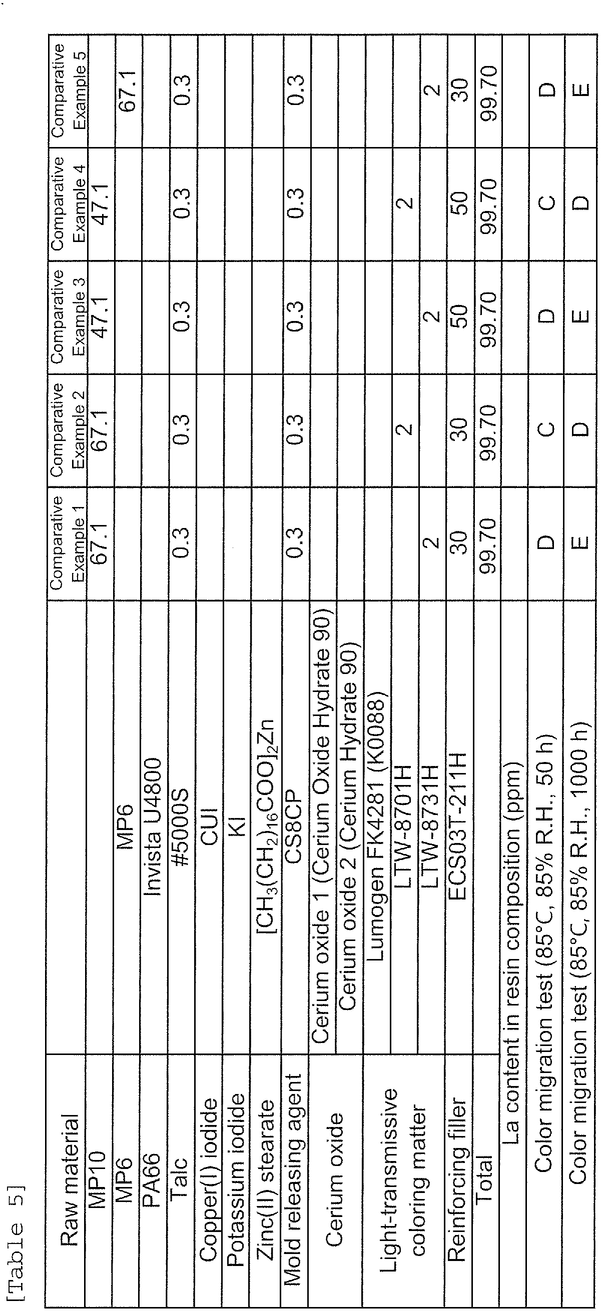

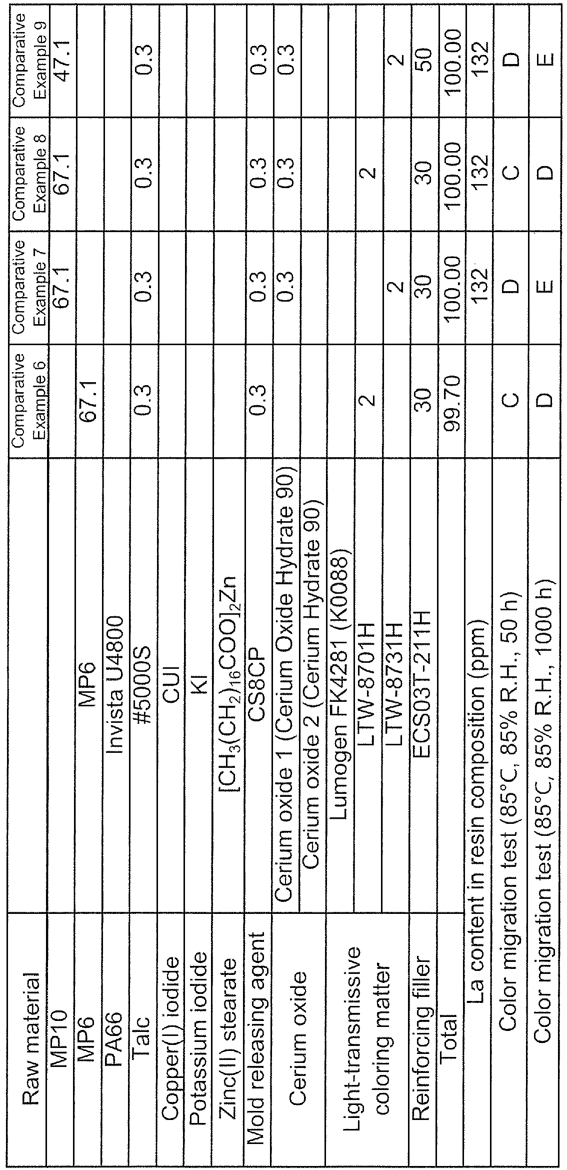

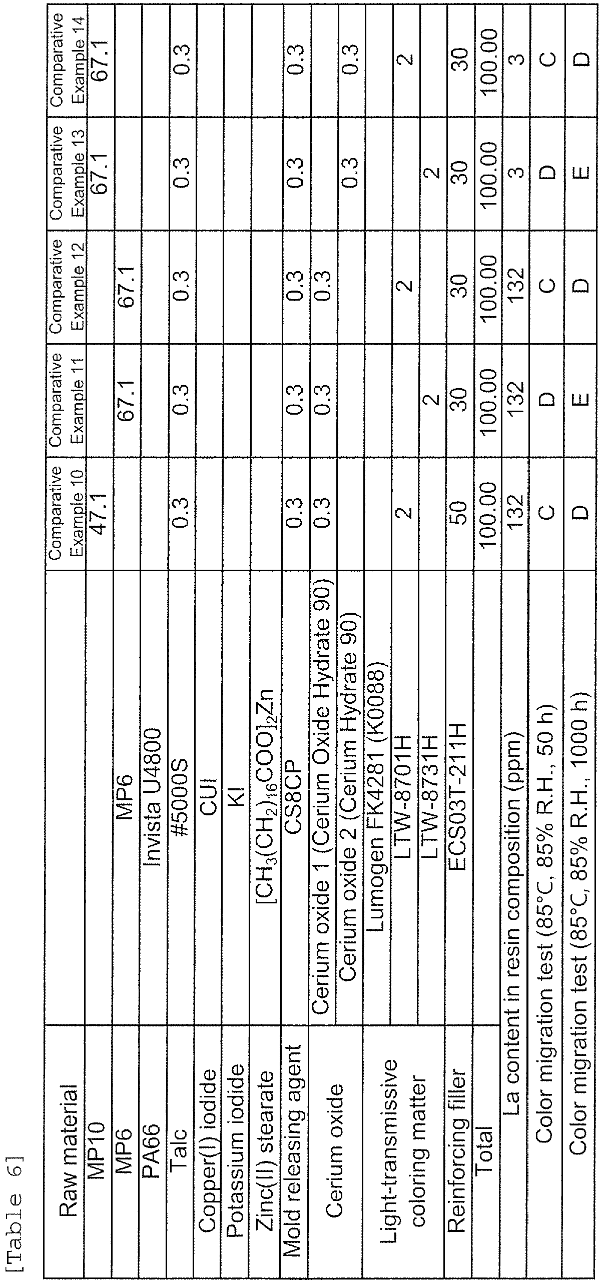

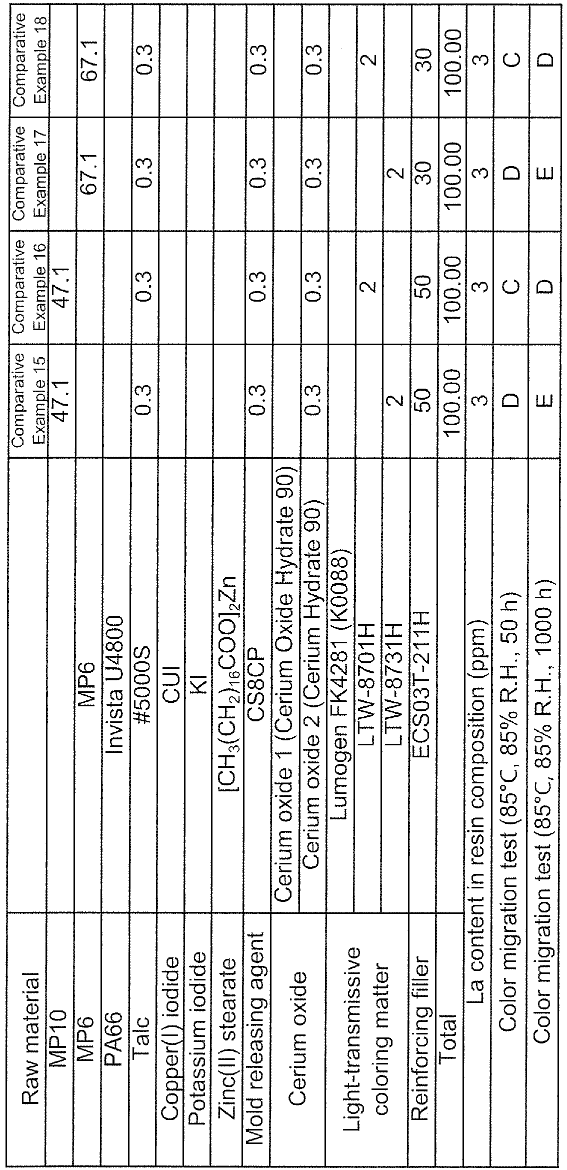

In the experiments above, the lanthanum content in the resin composition was estimated from the lanthanum content in cerium oxide. The lanthanum contents in other components were below the detection limit.

As is clear from the results above, the resin compositions of this invention were found to effectively suppress the color migration. In contrast, the cases with use of coloring matters other than the light-transmissive coloring matter having a perylene skeleton were found to demonstrate higher degrees of color migration.

## Claims

1. A transmissive resin composition for laser welding containing, per 100 parts by mass of a crystalline thermoplastic resin:
10 to 120 parts by mass of a reinforcing filler;
0.01 to 1.0 part by mass of a light-transmissive coloring matter having a perylene skeleton; and
at least one of copper compound, alkali metal halide, and cerium oxide.

2. The resin composition of claim 1, having a lanthanum content in the resin composition of more than 0 ppm by mass and 40 ppm by mass or less.

3. The resin composition of claim 1 or 2, containing a cerium oxide having a lanthanum content, measured by ICP atomic emission spectroscopy, of more than 0% by mass and 1% by mass or less.

4. The resin composition of any one of claims 1 to 3, wherein a content of the cerium oxide in the resin composition is 0.01 to 5% by mass.

5. The resin composition of any one of claims 1 to 4, wherein the crystalline thermoplastic resin contains a polyamide resin.

6. The resin composition of claim 5, wherein the polyamide resin contains a polyamide resin that includes a diamine-derived structural unit and a dicarboxylic acid-derived structural unit, in which 70 mol% or more of the diamine-derived structural unit is derived from xylylenediamine, and 70 mol% or more of the dicarboxylic acid-derived structural unit is derived from straight-chain aliphatic α,ω-dicarboxylic acid having 4 to 20 carbon atoms.

7. The resin composition of any one of claims 1 to 6, wherein the light-transmissive coloring matter having a perylene skeleton is a pigment.

8. A kit comprising the resin composition described in any one of claims 1 to 7; and a light-absorptive resin composition that contains a thermoplastic resin and a light-absorptive coloring matter.

9. A formed article formed of the resin composition described in any one of claims 1 to 7, or formed with use of the kit described in claim 8.

10. The formed article of claim 9, being a car-borne camera.

11. A car-borne camera comprising the formed article described in claim 10.

12. A method for manufacturing a formed article, the method comprising laser-welding a formed article formed of the resin composition described in any one of claims 1 to 7, with a formed article formed of a light-absorptive resin composition that contains a thermoplastic resin and a light-absorptive coloring matter.
